(19)

Europäisches
Patentamt
European
Patent Office
Office européen
des brevets

(11) **EP 2 960 849 A1**

(12) **EUROPEAN PATENT APPLICATION**

(43) Date of publication:
**30.12.2015 Bulletin 2015/53**

(51) Int Cl.:
*G06Q 30/06* (2012.01)    *G06Q 30/02* (2012.01)

(21) Application number: **15174025.5**

(22) Date of filing: **26.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **26.06.2014 IL 23342214**

(71) Applicant: **Deutsche Telekom AG**
**53113 Bonn (DE)**

(72) Inventors:
• **Grolman, Edita**
**8458503 Beer Sheva (IL)**

• **Bar, Ariel**
**7740914 Ashdod (IL)**
• **Shapira, Bracha**
**8472811 Beer Sheva (IL)**
• **Rokach, Lior**
**8496500 Omer (IL)**
• **Dayan, Aviram**
**8496500 Omer (IL)**

(74) Representative: **Maiwald Patentanwalts GmbH**
**Elisenhof**
**Elisenstrasse 3**
**80335 München (DE)**

(54) **METHOD AND SYSTEM FOR RECOMMENDING AN ITEM TO A USER**

(57)    A computer implemented method for recommending an item to a user, according to which a plurality of users each of which with a known profile, interface with a corresponding computerized device and binary event-specific, user-item source matrices are generated, for indicating whether a given user performed a given explanatory event included in a corresponding source matrix. All users included in the source matrices are grouped to a profile-specific cluster and items included in the source matrices are grouped to an item category cluster to generate a predictive event book matrix which indicates the probability that an event unknown to have been performed by the given user will be performed for each profile-specific and item category cluster combination included in the one or more source matrices. Each user gets recommendation about an item included in the source matrices, which has a highest probability.

EP 2 960 849 A1

**Description**

**Field of the Invention**

The present invention relates to the field of recommender systems. More particularly, the invention relates to a transfer learning method for recommender systems by which meaningful patterns are extracted from each explanatory event record.

**Background of the Invention**

There are two main techniques for gathering feedback from a user: "explicit feedback" and "implicit feedback". With respect to explicit feedback, the recommender system requires the user to explicitly evaluate items, while no active user involvement is required with respect to implicit feedback. The feedback is derived from monitoring the activities of a user.

Most Recommender Systems (RS), especially those that are based on collaborative filtering (CF), rely on explicit ratings (e.g. a 1.5 rating score). Unfortunately, in many real-life commercial Recommender Systems, the rating data is scarce and biased because many users waive the rating option. Lack of available ratings may lead to a sparsity problem, negatively affecting the accuracy of neighborhood-based recommendation methods. Although existing ratings are not always available, much information about the user activities in the form of event records can be obtained. There have been several attempts in the prior art that tried to address implicit event data, either by addressing a single event type, or by addressing multiple events by mapping them to numeric or ordinal values (e.g. 3). However, transforming this data into an explicit rating is not straightforward and usually does not reflect the actual preference of the users.

Many studies show that the interaction with RS is used for other functions in addition to acquiring recommended items, and the role of an RS within an information system can be quite diverse. In many applications, people use RS for discovering new items in various fields, particularly fields that are in rapid development. Due to the unfamiliarity with such items, many users tend not to rate them. By observing user behavior, implicit feedback indirectly reflects the user's opinion and preferences. In addition, in situations in which users may be more likely to rate items that they have strong opinions about, a biased set of items may be created by the ratings themselves. Beyond the obvious problem of having biased information, in this situation the RS may not allow users to be exposed to new products. Another important point is that a sufficient number of explicit ratings is usually unavailable in real life scenarios while implicit data is more within reach; this is why the majority of RS try to weight the various events until they achieve rates to use as input. Finally, it is important to note that naturally explicit feedback relies on the user's willingness to provide explicit ratings, while in implicit feedback there is no such dependence. Furthermore, explicit feedback may have a negative influence on the accuracy of RS, due to user variability and inconsistency in providing these ratings.

Most algorithms can interface only with systems that have rating data, and require identical rating scales for all rating matrices (sources and target). Although prediction accuracy is a very significant RS parameter, most collected data is related to binary preference or event data since many users do not cooperate by providing explicit ratings. Thus, additional methods need to be developed to support implicit data input.

The method of the present invention relies on multiple types of implicit data input without need for any explicit information. There are no limitations on the number of implicit events to use; furthermore, there is no limitation on the selected target event as well.

The basic machine learning technique that the method of the present invention is based on is transfer learning (TL). TL, which is a recently developed machine learning method intended to extract knowledge learned from one task in a domain and used for a target task in a different domain, is needed when required to rebuild statistical models following changes in the distribution of data, for example if the data becomes outdated, or for newly-built systems that suffer from a lack of sufficient information.

Collecting new training data and rebuilding the model is an expensive process that cannot always be done. The common work flow in the field of Machine Learning is to first train a model based on the data that is available for a given issue - the training data, whether labeled or unlabeled. The behavior is predicted in the examined domain using the test data, according to the model that was built, and in accordance with the assumption that the training and test data are derived from the same feature space and distribution, an assumption which is not always necessarily true.

In contrast to traditional techniques, transfer learning allows the training and test set to have different domains, tasks and distributions. This may come in handy for newly-built CF-based systems in which the target domain is extremely sparse. Utilizing different sources of information can significantly improve accuracy of results by alleviating the data sparsity problem.

An example of an algorithm based on the TL method is the CBT disclosed by Li et al "Can Movies and Books Collaborate? Cross-domain Collaborative Filtering for Sparsity Reduction", In Proceedings of the 21st International Joint Conference on Artificial Intelligence, July, 2009, pp. 2052-2057, Morgan Kaufmann Publishers Inc. Assuming that the domains are equally related, Li et al suggests to alleviate the sparsity problem by using user-item rating patterns found for the source domain (the dense rating matrix) and transfer them to the target domain (the sparse rating matrix).

In order to transfer the knowledge, a bridge is established at the cluster level of user-item rating patterns. The algorithm of Li et al is built in the following way: first, a codebook is constructed. The codebook summarizes the original rating data, i.e. it summarizes the data of the source domain. The constructed codebook indicates the rating that a user belonging to a specific user cluster will give to an item that belongs to the specific item cluster. The codebook is then constructed by simultaneously clustering the users and the items of the source matrix. The second step of the algorithm is to model each target user and target item to one of the clusters respectively in the source domain.

However, if the users in the two domains behave differently, or if the domains are not significantly related, this may lead to a condition called Negative Transfer, which may result with a negative effect on the model and a decrease in the target model accuracy.

On the other hand, a TL method is subject to overfitting during attempts to avoid the Negative Transfer condition.

It is an object of the present invention to provide a transfer learning method for recommender systems that relies on multiple types of implicit data input without need for any explicit information.

It is an object of the present invention to provide a transfer learning method for recommender systems that avoids a negative transfer condition as well as overfitting.

Other objects and advantages of the invention will become apparent as the description proceeds.

## Summary of the Invention

The present invention provides a computer implemented method for recommending an item to a user, comprising the steps of: interfacing, by a plurality of users each of which having a known profile, with a corresponding computerized device; generating one or more binary event-specific, user-item source matrices for indicating whether a given user performed a given explanatory event included in a corresponding source matrix; grouping each user included in said one or more source matrices to a profile-specific cluster and grouping each item included in said one or more source matrices to an item category cluster to generate a predictive event book matrix which indicates the probability that an event unknown to have been performed by said given user will be performed for each profile-specific and item category cluster combination included in said one or more source matrices; and recommending to said given user an item included in said one or more source matrices which is of a highest probability.

The present invention is also directed to a recommender system, comprising: a plurality of computerized devices; an input device associated with each of said computerized devices, by which a user having a known profile interfaces with a corresponding computerized device; a database for storing event records as inputs, in response to an interfacing operation performed with respect to said corresponding computerized device; and a server in data communication with each of said computerized devices via a data network, for receiving said event data, wherein said server is operable to generate:

a target event and one or more source events;
binary event-specific, user-item source matrices for indicating whether a given user performed a given explanatory event included in a corresponding source matrix; to group each user included in said source matrices to a profile-specific cluster and to group each item included in said source matrices to an item category cluster, to generate a predictive event book matrix which indicates the probability that an event unknown to have been performed by said given user will be performed for each profile-specific and item category cluster combination included in said source matrices, and to recommend to said given user an item included in said source matrices which is of a highest probability.

## Brief Description of the Drawings

In the drawings:

- Fig. 1 is a method for recommending an item to a user, according to one embodiment of the present invention; and
- Fig. 2 is a schematic illustration of a system for recommending an item to a user, according to one embodiment of the invention.

## Detailed Description of Preferred Embodiments

In the method of the present invention, implicit events are used to learn the preferences of a user and to predict a target event, such as buying (for example, it is possible to assume that indication about "buying" is driven from a "click" and "add to playlist" records). The method does not require explicit ratings from the user, i.e., there is no need to disturb and interrupt the user experience by asking for explicit ratings.

The sparsity problem in collaborative filtering (CF) is able to be alleviated by extracting meaningful patterns from different source events such as an exposure to webpage event after being loaded, a scrolling webpage event, a clicking item event and a user plays item event, each of which will be referred hereinafter as "explanatory events" and projecting them towards a chosen target event. Rather than applying transfer learning (TL) for cross-domain recommendation (e.g. from books to movies), as practiced heretofore by prior art methods, the present invention utilizes TL for learning cross-events patterns in the same domain. The target event, e.g. a buying event, is usually sparser than other events and therefore can benefit from TL.

The sparse rating-related nature of the target event is alleviated by utilizing TL from other available events, such as click, view, and add to cart events, without assuming any overlapping of users or items between the different events. Each event type may be referred to as a "source domain" and each target event as a "target domain", in accordance with TL terminology. The resulting model can estimate the probability of a certain user *u* to perform the target event on item *v*. Consequently, an item, i.e. a service or product to be potentially consumed that is user selectable via a data network, is able to be recommended to a user by simply sorting all the items in descending order, according to their corresponding probabilities. The model can even estimate the probability for a certain user u and item *v* even if the user did not perform any explanatory related event to item *v*.

The Applicant has discovered that user-item patterns that are found in a certain event type can also be found in other event types. Thus it is possible to transfer learned models across event types using TL.

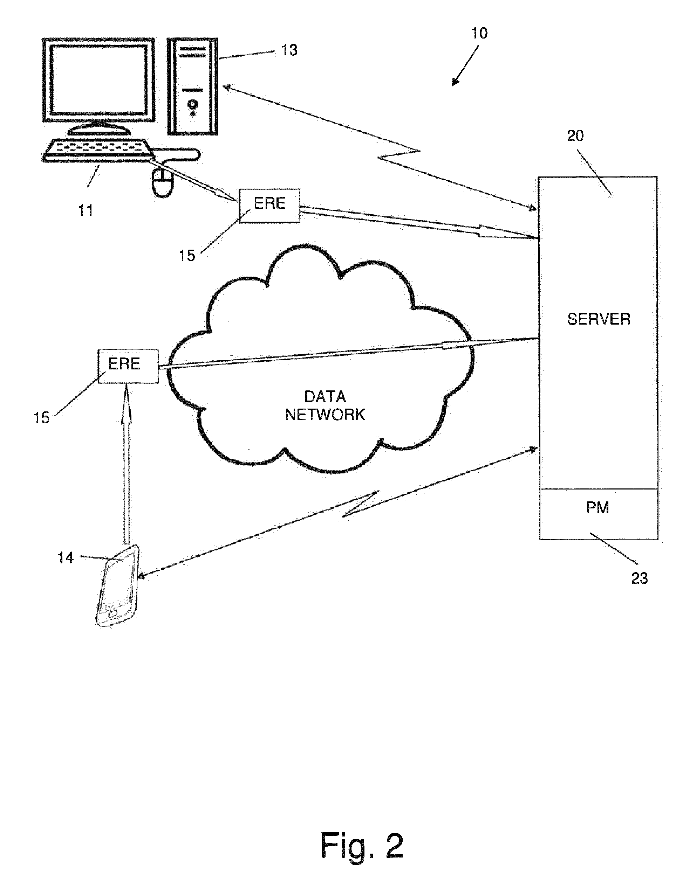

The method of the present invention can be carried out in conjunction with system 10 schematically illustrated in Fig. 2. System 10 comprises a plurality of computerized devices, such as tabletop computers 13 and mobile communication devices 14, each of which communicates with one or more data networks 18. When a user interfaces with each computerized device by means of an input device 11, such as a keypad, mouse or a touch screen, the ensuing event is registered by an event recording engine (ERE) 15 and the corresponding data is received by recommender server 20, which also communicates with a data network 18. The ERE is external and is used as an input. Server 20 processes all event data received from a plurality of users with processing module (PM) 23 to generate binary and predictive matrices, as well as a vector which defines the relatedness of an explanatory event to a target event, as will be described hereinafter. ERE 15 may reside in server 20, or alternatively an ERE may reside in each computerized device.

## Algorithm Overview

Cross-domain codebook transfer learning concepts are applied for discovering meaningful patterns between various event record datasets. Given record sets of different event types for a specific domain, a most meaningful event type, e.g. buying, is considered as the "target event" (corresponding to the "target domain" in the cross-domain models), while the explanatory events act as the "source events" (corresponding to "source domains").

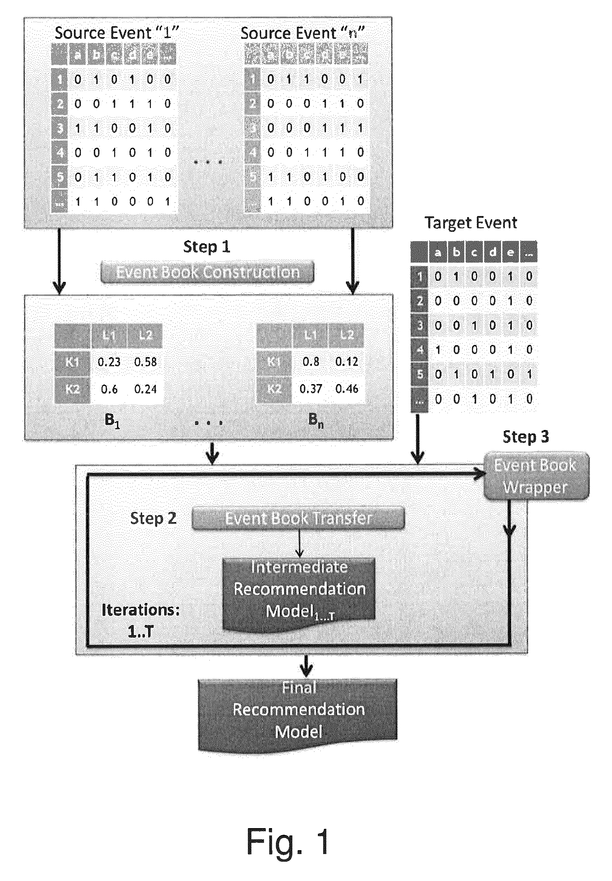

Fig. 1 illustrates the method for building the recommendation model, as described in details in the following steps:

1. **Event Book Construction -** During the first step, codebooks are constructed from each source event. The codebooks capture the behavioral patterns of users for each specific event. The output of this step is a set of matrices, each representing a codebook for a source event. The codebooks (referred to as *B*) are composed from clusters of users and items.

2. **Event Book Transfer** - An iterative transfer learning process is applied on the codebooks from step 1 to the target event. In this step, each user and each item from the target event is matched to one selected cluster of users and items, respectively, in each explanatory event codebook. The matching is actually a transfer of the knowledge to the target domain. The wrapper in step 3 repeats this step with different source events subsets and produces several candidate models.

3. **Event Book Wrapper** - The wrapper generates several models using the process described in step 2 and then selects the best observed model that will be used as the model of the target event for the recommendation process. In practice the Wrapper activates the Event Book Transfer several times, each time with a different set of candidate event books. Each activation generates a candidate model. Finally, the Wrapper selects the most accurate model from these models as the final model.

The model is represented as two matrices (*U* and *V*) and a vector $\alpha$. *U* maps each user in the target event to a vector of *N* cluster indices corresponding to *B* (codebook), while *V* is a symmetric map in the context of items; $\alpha$ is a vector specifying the global relatedness of each explanatory event to the target event. The prediction rule is based on the model that was learned by the algorithm defined in Equation 1.

$$p(uid, iid) = \sum\nolimits_{n=1}^{N} \alpha_n B_n [U_{uid,n}][V_{iid,n}] \qquad \text{Eq.} \quad (1)$$

Each of these components is able to be learned by the algorithms described in the following sections.

**Event Book Construction**

This algorithm is a lightweight version of a co-clustering approach for grouping similar users and items together to thereby generate a codebook for each of the source events datasets. The input of the algorithm is the events record, as each record contains a user ID (ranging from 1 to p), an item ID (ranging from 1 to q) and a rating value which is fixed to be "1", indicating that the event is applicable in this user-item context. These records are divided into training (ST) and validation (SV) sets. The algorithm associates each user to one of K possible clusters and each item to L possible clusters (K and L are controlled parameters of the algorithm). The outputs of the algorithm are: U - the users' cluster assignment map specifying for each user his associated user-cluster index ranging from 0 to K-1; V - a symmetric vector, mapping each item to item-cluster index (0 to L-1); and B the codebook; KxL matrix specifies the probability that this event is applicable for each user-item cluster/group combination. The algorithm is set to solve the optimization problem presented in Equation 2, which aims to minimize the squared error between the actual ratings in ST and the predicted ones according to the codebook values.

$$\min_{U,V,B} \sum_{ST} (ST_{uid,iid} - B\,[U_{uid}][V_{iid}])^2 \qquad \text{Eq.} \quad (2)$$

Next, we start an iterative process of co-clustering and pattern discovering (lines 6-15). Each of the iterations consists of three parts: 1) User's cluster discovery: according to the current $V$ and $B$ values we find the optimal cluster-index for each user (lines 8-9), minimizing the total error between the user's actual event-ratings (each fixed to be 1) and the predicted ones using the current other model variables. After discovering the new cluster assignment for all users, we update the codebook (line 11); 2) Items cluster discovery - symmetric to the previous phase (lines 11-13), but from the items' perspective. 3) Evaluation - we evaluate the accuracy of the current model measure on a validation set - $SV$ (line 14), we apply this phase in order to avoid overfitting of the codebooks on $ST$. The termination condition is either: After predefined $T$ iterations; or after iteration with no significant improvement to the RMSE, compared to the previous one (an improvement which is less than threshold value $\varepsilon$, or no improvement at all). Lastly, the algorithm returns the generated model from the iteration with minimum RMSE (line 16).
The following is the co-clustering, event book construction algorithm:

1. For $iid \leftarrow 1 .. q$ do
2. Set randomly $V^{(0)}iid$ from $\{0, .. L\text{-}1\}$
3. For $uid \leftarrow 1 .. p$ do
4. Set randomly $U^{(0)}_{uid}$ from $\{0, .. K\text{-}1\}$
5. Calculate current CodeBook - $B^{(0)}$, according to eq. 3.
6. Set $t=1$
7. While (*!Termination Condition*) do
8. For $uid \leftarrow 1 .. p$ do

$$U^{(t)}uid = \arg\min_{j, j\in\{0...K-1\}} \sum_{iid\in ST_{uid}} (ST_{uid,iid} - B^{(t-1)}[j][V_{iid}^{(t-1)}])^2$$

9. Calculate current CodeBook - $B^{(t)}$, according to Eq. 3.
10. For $iid \leftarrow 1 .. q$ do

$$V^{(t)}iid = \arg\min_{j, j\in\{0...L-1\}} \sum_{uid\in ST_{uid}} (ST_{uid,iid} - B^{(t-1)}[U_{uid}^{(t)}][j])^2$$

11. Update current CodeBook - $B^{(t)}$ ,according to eq. 3.
12. Evaluate current model (*calculate RMSE*) on *SV* data set
13. t=t+1
14. Return $U^{(t)}$, $V^{(t)}$, $B^{(t)}$ with minumum RMSE on *SV*.

In lines 1-5, a random cluster index is set for each user and item in ST, and then the initial codebook is calculated. Each element Bij in the matrix is set according to Equation 3: the number of observed events in ST associated with the user-item pairs corresponding to cluster indices (i,j), divided by the total size of the pairwise-cluster (number of users that belong to cluster i multiplied by the number of items belonging to cluster j).

$$B_{i,j} \;=\; \frac{|ST\,/\,U_{uid}=i \wedge V_{iid}=j|}{|ST\,/\,U_{uid}=i|\,*\,|ST\,/\,V_{iid}=j|} \qquad \text{Eq.} \qquad (3)$$

An iterative process of co-clustering and pattern discovering is then initiated in lines 6-15. Each of the iterations consists of three parts: (1) User's cluster discovery: the optimal cluster-index for each user is found according to the current V and B values (lines 8-9), minimizing the total error between the user's actual event-ratings (each fixed to be 1) and the predicted ones using the current other model variables. After discovering the new cluster assignment for all users, the codebook is updated (line 11); (2) Items cluster discovery - symmetric to the previous phase (lines 11-13), but from the items' perspective. (3) Evaluation - the accuracy of the current model measure on a validation set - SV is evaluated (line 14), this phase being applied in order to avoid overfitting of the codebooks on ST. The termination condition is either: After predefined T iterations; or after iteration with no significant improvement to the RMSE, compared to the previous one (an improvement which is less than threshold value ε, or no improvement at all). Lastly, the algorithm returns the generated model from the iteration with minimum RMSE (line 16).

## Event Book Transfer

This is the core learning algorithm. Based on the codebooks generated from multiple source events datasets, a model for predicting the ratings on the target event is generated. The codebooks from the different source events discover patterns regarding the probabilities that certain groups (clusters) of users will perform the given explanatory event on different groups (clusters) of items; in this algorithm this knowledge is transferred to the target event. For each user and item in the target event records, the most relevant clusters in each source/explanatory events is associated with the given codebook; in addition the algorithm determines the global relevance of each source/explanatory event to the target domain. The baseline algorithm advantageously includes a compact representation of data-structures, lacks a highly sparse indicator-based matrix W, and avoids unnecessary and costly linear-algebra matrix operations.

The inputs of the algorithm are the TT and TV datasets from the target event data source (training and validation datasets, respectively, with the same structures as SV and ST from the Event Book Construction section) and N source event codebooks. The outputs of the algorithm are the U and V matrices mapping for each user and item in the target event, the relevant clusters in each of the source event codebooks and a global alpha vector indicating how to aggregate the source event codebooks together. A compact representation for U and V is used, for each user/item the associated vector in U/V contains the cluster indices directly for each of the N source events. This compact representation reduces space complexity, and enables one to predict the rating that a user (uid) will give to an item (iid) directly, without using costly matrix multiplications. The prediction rule is presented in Equation 1. The relevant matrix indices of each source event codebook are simply observed for summarizing the results according to the relevant alphas. In order to find U, V and the relevant alphas, an optimization problem intended to minimize the squared error of the model is defined, as presented in Equation 4.

$$\min{}_{U,V,\alpha} \sum_{TT} \left( TT_{uid,iid} - \sum_{n=1}^{N} \alpha_n B_n [U_{uid,n}][V_{iid,n}] \right)^2 \qquad \text{Eq.} \qquad (4)$$

The following event book transfer algorithm is used to solve this optimization problem:

1. For iid←1 .. *q* do
2. For n ← 0 .. *N-1* do

3. set randomly $V^{(0)}_{iid,n}$ from $\{0, .. L_{n-1}\}$

4. For $n \leftarrow 0 .. N\text{-}1$ do

5. set $\alpha^{(0)}_n$ to $1/N$

6. Set $t=1$

7. While (*!Termination Condition*) do

8. For $uid \leftarrow 1 ..p$ do

9. Find optimal assignment $U_{uid,}*$ minimizing:

$$\sum_{iid \in TT(uid)}(TT_{uid,iid} - \sum_{n=0}^{N-1}\alpha_n^{(t-1)}B_n[U_{uid,n}][V_{iid,n}^{(t-1)}])^2$$

10. Set $U^{(t)}_{uid,}*$ according to the returned solution

11. For $iid \leftarrow 1 .. q$ do

12. Find optimal assignment $V_{iid,}*$ minimizing:

$$\sum_{uid \in TT(iid)}(TT_{uid,iid} - \sum_{n=0}^{N-1}\alpha_n^{(t-1)}B_n[U_{uid,n}^{(t)}][V_{iid,n}])^2$$

13. Set $V^{(t)}_{iid,}*$ according to the returned solution

14. Update $\alpha_0, \alpha_1, ... \alpha_{n-1}$.

15. Evaluate current model (*calculate RMSE*) on *TV*

16. $t = t+1$.

17. Return $U^{(t)}, V^{(t)}, B^{(t)}, \alpha^{(t)}$ with minumum RMSE on *TV.*

At first, clusters are randomly assigned for each item in V (lines 1-3) and all alphas are initialized equally to 1/N (lines 4-5). In order to find the best model parameters the rating dataset TT is iterated several times until reaching a termination condition (lines 6-7). Each of the iterations consists of four phases: (1) Iterating all users and adjusting their cluster indices (U), minimizing the total squared error between the real ratings and the predicted ones according to the other parameters of the current model - selecting the best cluster index in each source event codebook from all possible combinations (lines 8-10). (2) Iterating all items and adjusting their cluster indices (V) in a similar way (lines 11-13). (3) Updating alphas by solving a set of N linear equations (lines 15-16) using a similar approach presented in Moreno et al: "Transfer learning for multiple domains", Proceedings of the 21st ACM international conference on Information and knowledge management (pp. 425-434), ACM. (4) Evaluating the current model on the validation set TV (line 16) in order to avoid overfitting. In all parts of the algorithm, the ratings on TT/TV are scanned directly while ignoring missing values, thereby obviating the need of costly operations. The termination condition (line 7) is either: After predefined T iterations or after iteration with no significant improvement to the RMSE compared to the previous one (improvement which is less than a threshold value $\varepsilon$, or no improvement at all). Finally, the model with minimum RSME is returned on TV (line 17).

## Event Book Wrapper

Commercial recommender systems may include dozens of types of explanatory events in order to support the target events. Sometimes it is not optimal to use all source domain codebooks, as some of them do not represent valid patterns in the target domain or may cause overfitting issues. An overfitting condition is liable to occur in the event-based codebook transfer, if at all. Given N different explanatory event types, there are $O(N^2)$ possible combinations to examine, to determine whether each of the events will be part of the final model. As it is not practical to examine all possible combinations, a step-forward heuristic feature selection technique may be implemented in order to find a subset of source/explanatory event types which will generate a suboptimal solution to this problem at a linear time complexity.

The heuristic feature selection technique includes four phases: Firstly, the event book construction algorithm is applied on each of the N explanatory events datasets. Secondly, the event book transfer algorithm is run N times, each time with a single but different source event codebook projected to the target domain. Thirdly, all source event codebooks are ranked according to their RMSE performances on the target validation set (TV). Fourthly, a greedy algorithm which adds event codebooks according to the codebook rankings and generates a new event book transfer model with the current pool of event codebooks is initiated. Event codebooks are added until there is improvement to the RMSE on TV or after adding all available codebooks. The model with the lowest RMSE is returned as the final model.

The time complexity is advantageously only O(N).

A byproduct of this algorithm is a ranking list of all source events generated codebooks corresponding to the target event by their accuracy performance. These values can serve as baseline estimates for assigning weights for each event type, if one wishes to linearly aggregate events to a single rating value. The ranking of explanatory events generates more objective weights, rather than the traditional manual weight assignment which may be considered subjective.

**Evaluation**

Preliminary experimental results have been carried out according to the method of the present invention for event based codebook transfer on real-life commercial datasets.

Proprietary datasets obtained from two popular media sites in two domains were used: Music Loads (MLDE) from http://www.musicload.de/ and Video Loads (VL) from http://www.videoload.de/. The following is a summarization of the main dataset characteristics: The MLDE and VL datasets consist of recorded and anonymous user events performed on products in the system. In each dataset the most meaningful event in the system is selected and marked as the target event on which recommendations are generated, and in addition, two supporting events that act as source events to the target event.

In MLDE the target event was set as "user buys item", while the two explanatory events were set to "user plays item" and "user clicks item". In VL the target event was set to be a union of the "user plays item" and "user loans item" events, while the explanatory events were set as "user clicks item" and "user adds to recordings". In both datasets the data was extremely sparse (more than 99.98%): the MLDE (music) dataset included approximately 11M event records performed by 300K users on 1M different items, while the VL (video) dataset included approximately 4M event records of 220K users on 100K items.

The goal of the following experiments is to evaluate whether the method of the invention can successfully transfer knowledge from source events to the selected target event. The accuracy between models is therefore compared - the full generated event-based codebook transfer model taking into consideration all source event codebooks as described hereinabove, which are based on basic CF methods. The basic CF methods were applied by using a state of the art item-to-item CF approach for Big Data. For the similarity measure we the Cosine coefficient and Jaccard were used. In all configurations, the neighborhood size was set to be 20 - this value was detriment during the calibration process. The CF model which yielded the best result of all these options was selected to serve as the basis model for comparison. The k-NN method was chosen for evaluation.

All event records (target and source) where divided into training and testing datasets. The training data consisted of 80% of the ratings, selected by random splits over the users' record profiles, while the testing data consisted of the remaining 20%. Since the event book contraction and transfer algorithms rely on validation sets, the training sets were split into "real" training (ST/TT) and valuation (SV/TV) sets with an 80:20 ratio (real training 80%), in order to avoid overfitting issues.

The Event Book Construction was configured as follows: the size of the user and item clusters (K and L) were to 20. The stopping criteria parameters of the learning algorithm, were calibrated to be T = 10 (maximum iteration per single run) and $\varepsilon = 0.0001$ (minimum required improvement in the RMSE on the validation set per iteration). The stopping criteria parameters in Event Book Transfer were set to these values in a similar way.

The accuracy of the models was compared using RMSE precision and recall metrics on the test set. RMSE measures the deviation of the predicted rating from the real ones, while putting more emphasis on large errors. In order to measure precision and recall, top-N reconditions was first generate for each user according to the generated model, then based on the test set profile of the user measure precision - the number of hits (generated recommendations which appear in the user's test set profile) divided by N, and recall - the number of hits divided by the user profile size. Top N-recommendations were generated using random sampling of N*2 items which do not appear in the user's training profile; calculating the expected rating of each of the sampled items according to the model, and finally returning the N items with the highest prediction scores. In all experiments, N was set to 1000.

**Experiment 1**

The initial part of the experiment evaluated well-known CF models, which are suitable for binary and large-scaled datasets. The accuracy metrics (RMSE, precision and recall) of these models' baseline act as a baseline for the method of the invention. In this experiment, a state of the art item-to-item CF approach for Big Data was applied, using the Jaccard as well as the Cosine coefficient as the similarity measure. In order to choose the best model for comparison each model was run twice. In the first scenario, CF models based only on the most significant event available data were generated. In the second scenario, the input data as added to the explanatory events data was expanded in order to reduce the sparseness of the data. In both scenarios, binary rating schema were applied to indicate for each user-item pair whether there is a certain interaction between them.

Table 1 demonstrates the accuracy results of the different basic CF models for the MLDE (music) dataset. In the model name column, the similarity measure (JACCARD/COSINE) was indicated in brackets, while enriched datasets with the explanatory events were marked with a plus sign. For each of the accuracy metrics, the best observed result was highlighted with a bold font.

Table 2 demonstrates accuracy results for the VL (video) dataset, with the same notations. The resulting precision and recall absolute values are considered low since the test set includes the entire item catalog, which includes millions of items. Furthermore, as was mentioned, the dataset is extremely sparse.

The next part of the experiment was to construct the event codebooks for every explanatory event type in both the MLDE and VL datasets. The four different event codebooks (two for each dataset) were generated by applying the Event Book Construction algorithm. The Event Book Transfer and the Event Book Wrapper algorithms were then applied on these event codebooks with the target event dataset, to examine the projection of acquired knowledge and patterns from the event codebooks to the target event while performing transfer learning from implicit events (TIE).

TABLE 1

| | Basic CF Results - MLDE Dataset | | | |
|---|---|---|---|---|
| | Model Name | RMSE | Precision | Recall |
| 1 | MLDE (JACCARD) | 0.6981 | 1.01E-04 | 0.0116 |
| 2 | MLDE (COSINE) | 0.7053 | 1.02E-04 | 0.0118 |
| 3 | MLDE (JACCARD)+ | **0.5871** | 1.38E-04 | 0.0158 |
| 4 | MLDE (COSINE)+ | 0.5941 | **1.39E-04** | **0.0160** |

TABLE 2

| | Basic CF Results - VL Dataset | | | |
|---|---|---|---|---|
| | Model Name | RMSE | Precision | Recall |
| 1 | VL (JACCARD) | 0.6981 | 1.35E-04 | 0.0315 |
| 2 | VL (COSINE) | 0.6418 | 1.35E-04 | 0.0318 |
| 3 | VL+ (JACCARD) | 0.5807 | **1.44E-04** | **0.0340** |
| 4 | VL+ (COSINE) | **0.5797** | 1.43E-04 | 0.0336 |

Table 3 summarizes the results of the generated models on the MLDE test dataset. The baseline model results appear on the first indexed row. The TIE models appear next along with the applied codebook, see column "model name" in the table (the knowledge transfer process is marked by an arrow). The final selected model by the Event Wrapper appears last (marked with "Final" in the brackets). The best result in each metric appears in bold font.

In this experiment, the Event Book Wrapper generated three different TIE models: one with the "click" codebook (line 2), one with the "play" codebook (line 3) and one with both the "click" and "play" codebooks (line 4). Eventually, the last selected TIE model was according to the wrapper heuristic, with the two source event codebooks. This model had substantially improved all accuracy matrices compared to the baseline model. The improvement level of the RMSE in the final model was 15.33%, whereas in the precision measure there was an improvement of 5.11% and in the recall measure an improvement of 5.26%. One can observe that the model with the two event codebooks was superior to the TIE models with single codebooks.

**Table 3**

| | Accuracy Results - MLDE Test Dataset | | | |
|---|---|---|---|---|
| | Model Name | RMSE | Precision | Recall |
| 1 | Baseline CF | 0.5871 | 1.39E-04 | 0.0160 |
| 2 | TIE: Click → Buy | 0.5061 | 1.41E-04 | 0.0163 |

(continued)

| | Accuracy Results - MLDE Test Dataset | | | |
|---|---|---|---|---|
| | **Model Name** | **RMSE** | **Precision** | **Recall** |
| **3** | TIE: Play → Buy | 0.5578 | 1.45E-04 | **0.0168** |
| **4** | TIE: Click + Play →Buy (Final) | **0.4971** | **1.46E-04** | 0.0168 |

This experiment was then repeated with target and source events in the VL dataset. Table 4 summarizes the main accuracy results, with the same notations as in Table 3. As can be seen, the best selected TIE model was one with both the "click" and "adds to recordings" event codebooks. This model has a 13.32% improvement in RMSE compared to the baseline model.

**Table 4**

| | Accuracy Results - VL Test Dataset | | | |
|---|---|---|---|---|
| | **Model Name** | **RMSE** | **Precision** | **Recall** |
| **1** | Baseline CF | 0.5797 | **1.44E-04** | **0.0340** |
| **2** | TIE: Click→ Loan-Play | 0.5866 | 1.37E-04 | 0.0323 |
| **3** | TIE: Add To Recs → Loan-Play | 0.5164 | 1.36E-04 | 0.0320 |
| 4 | TIE: Click + Add To Recs →Loan-Play (Final) | **0.5025** | 1.36E-04 | 0.0320 |

## Experiment 2

In this experiment, an additional source domain was provided. Instead of adding another different explanatory event as the source domain, the target domain itself was used, such that the target event served as a source domain as well.

All the algorithms were configured as in the previous experiment; however, the difference was by applying the Event Book Wrapper algorithm with all three event codebooks - the two source event codebooks and the target event codebook.

Applying the Event Book Wrapper algorithm on the MLDE dataset resulted in the following: Firstly, the algorithm generated three single TIE models (one per each event). Secondly, based on the performances of the models in the validation set, the ranking of the event codebooks was: Buy > Click > Play. Thirdly, according to the wrapper codebook selection heuristic, the next generated models were Buy + Click and Buy + Click + Play.

Table 5 summarizes the accuracy measures of this experiment on the MLDE test set (same notations as in Table 3).

**Table 5**

| | Accuracy Results - MLDE Test Dataset (with target event codebook) | | | |
|---|---|---|---|---|
| | **Model Name** | **RMSE** | **Precision** | **Recall** |
| **1** | Baseline CF | 0.5871 | 1.39E-04 | 0.0160 |
| **2** | TIE: Buy → Buy | 0.4757 | 1.04E-04 | 0.0120 |
| **3** | TIE: Buy + Click + Play → Buy (Final) | **0.4724** | **1.57E-04** | **0.0182** |

As one can see, the final model was substantially superior to the baseline model in the precision and recall metrics - improvement by 13.36% in precision and 14.29% in recall, while in terms of RMSE with a 14.29% improvement.

In addition, the final model is also superior in all accuracy aspects compared to the TIE models.

This experiment was then repeated with target and source events in the VL dataset. The best obtained TIE model was the one with all three event codebooks ("Loan-Play", "Click" and "Add to Recs"). This model had a 11.87% improvement in RMSE while also improving the precision and recall metrics by 4.17% and 2.65%.

Table 6 summarizes the main accuracy results, with the same notations as in Table 4.

These results indicate that the method of the present invention will improve the accuracy of the baseline models. Using the target event as an explanatory event improved the results, suggesting that using existing information is as important as using the obtained information from the other events. In addition, adding more event codebooks to the model improves its accuracy.

**Table 6**

| Accuracy Results - VL Test Dataset (with target event codebook) | | RMSE | Precision | Recall |
|---|---|---|---|---|
| **1** | Baseline CF | 0.5797 | 1.44E-04 | 0.0340 |
| **2** | TIE:<br>Loan-Play → Loan-Play | 0.5325 | 1.36E-04 | 0.0320 |
| **3** | TIE:<br>Loan-Play + Click + Add To Recs → Loan-Play (Final) | **0.5109** | **1.50E-04** | **0.0349** |

While some embodiments of the invention have been described by way of illustration, it will be apparent that the invention can be carried out with many modifications, variations and adaptations, and with the use of numerous equivalents or alternative solutions that are within the scope of persons skilled in the art, without exceeding the scope of the claims.

## Claims

**1.** A computer implemented method for recommending an item to a user, comprising the steps of:

a) creating event-books, one for each explanatory event, using the co-clustering for grouping users and items together into sets for clusters;
b) transferring discovered patterns from said event-books to a target event;
c) for each user/item, finding the most relevant cluster in each event-book, along with a vector of weights, said vector being indicative how much each explanatory event is related to said target event;
d) creating a model for predicting, for each user/item pair, the likelihood that said item is relevant to said user in the context of the target event; and
e) based on said model, generating recommendations by selecting the items with highest values.

**2.** A computer implemented method according to claim 1, comprising the steps of:

a) interfacing, by a plurality of users each of which having a known profile, with a corresponding computerized device;
b) generating a target event and one or more source events;
c) generating binary event-specific, user-item source matrices for indicating whether a given user performed a given explanatory event included in a corresponding source matrix;
d) grouping each user included in said source matrices to a profile-specific cluster and grouping each item included in said source matrices to an item category cluster to generate a predictive event book matrix which indicates the probability that an event unknown to have been performed by said given user will be performed for each profile-specific and item category cluster combination included in said source matrices; and
e) recommending to said given user an item included in said source matrices which is of a highest probability.

**3.** The method according to claim 1, wherein the target event is defined by a binary event-specific, user-item target matrix for indicating whether a plurality of users including said given user performed an event included in said target matrix.

4. The method according to claim 3, further comprising the step of applying an iterative transfer learning process onto the generated event book matrix and transferring knowledge learned therefrom to the target matrix, to predict a relevant rating for the given user with respect to an item of the target event.

5. The method according to claim 4, wherein the step of applying an iterative transfer learning process is performed by generating a global alpha vector for defining how to aggregate event book matrices together.

6. The method according to claim 5, further comprising prior to performing the recommending step, selecting a subset of event books to obtain a best observed model from the transfer learning process, thereby eliminating event books or events which do not contribute to the prediction of the target event.

7. A recommender system, comprising:

a) a plurality of computerized devices;
b) an input device associated with each of said computerized devices, by which a user having a known profile interfaces with a corresponding computerized device;
c) a database for storing event records as inputs, in response to an interfacing operation performed with respect to said corresponding computerized device; and
d) a server in data communication with each of said computerized devices via a data network, for receiving said event data, wherein said server is operable to:

i. generate a target event and one or more source events;
ii. generate binary event-specific, user-item source matrices for indicating whether a given user performed a given explanatory event included in a corresponding source matrix;
iii. group each user included in said source matrices to a profile-specific cluster;
iv. group each item included in said source matrices to an item category cluster;
v. generate a predictive event book matrix which indicates the probability that an event unknown to have been performed by said given user will be performed for each profile-specific and item category cluster combination included in said source matrices; and
vi. recommend to said given user an item included in said source matrices which is of a highest probability.

Fig. 1

Fig. 2

**EP 2 960 849 A1**

Europäisches
Patentamt
European
Patent Office
Office européen
des brevets

# EUROPEAN SEARCH REPORT

Application Number

EP 15 17 4025

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/013996 A1 (GRAVITY RES & DEV KFT [HU]; PILASZY ISTVAN [HU]; TIKK DOMONKOS [HU]; T) 2 February 2012 (2012-02-02) * abstract * * page 1, line 5 - page 7, line 27 * * page 23, line 4 - page 31, line 32 * ----- | 1-7 | INV. G06Q30/06 G06Q30/02 |
| X | EP 2 602 755 A1 (PALO ALTO RES CT INC [US]) 12 June 2013 (2013-06-12) * abstract * * paragraph [0001] - paragraph [0016] * * paragraph [0027] - paragraph [0091] * ----- | 1-7 | |
| A | US 2014/081996 A1 (BERTRAM RALF [DE] ET AL) 20 March 2014 (2014-03-20) * the whole document * ----- | 1-7 | |
| A | WO 2014/036020 A2 (OPERA SOLUTIONS LLC [US]) 6 March 2014 (2014-03-06) * the whole document * ----- | 1-7 | TECHNICAL FIELDS SEARCHED (IPC) G06Q |

The present search report has been drawn up for all claims

| Place of search | Date of completion of the search | Examiner |
|---|---|---|
| The Hague | 30 October 2015 | Peelen, Bastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

**ANNEX TO THE EUROPEAN SEARCH REPORT
ON EUROPEAN PATENT APPLICATION NO.**

EP 15 17 4025

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2015

| Patent document cited in search report | Publication date | Patent family member(s) | | Publication date |
|---|---|---|---|---|
| WO 2012013996 A1 | 02-02-2012 | NONE | | |
| EP 2602755 A1 | 12-06-2013 | EP | 2602755 A1 | 12-06-2013 |
| | | KR | 20130064701 A | 18-06-2013 |
| | | US | 2013151540 A1 | 13-06-2013 |
| US 2014081996 A1 | 20-03-2014 | DE | 10154656 A1 | 21-11-2002 |
| | | US | 2002178057 A1 | 28-11-2002 |
| | | US | 2014081996 A1 | 20-03-2014 |
| WO 2014036020 A2 | 06-03-2014 | CA | 2883307 A1 | 06-03-2014 |
| | | GB | 2519902 A | 06-05-2015 |
| | | US | 2014058882 A1 | 27-02-2014 |
| | | WO | 2014036020 A2 | 06-03-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Can Movies and Books Collaborate? Cross-domain Collaborative Filtering for Sparsity Reduction. **LI et al.** Proceedings of the 21st International Joint Conference on Artificial Intelligence. Morgan Kaufmann Publishers Inc, July 2009, 2052-2057

- Transfer learning for multiple domains. **MORENO et al.** Proceedings of the 21st ACM international conference on Information and knowledge management. ACM, 425-434